# EUROPÄISCHE PATENTSCHRIFT

(11) **EP 1 984 717 B1**
(45) Veröffentlichungstag und Bekanntmachung des Hinweises auf die Patenterteilung: **07.07.2010**
(21) Anmeldenummer: 07721916.0
(22) Anmeldetag: 14.02.2007
(51) Int. Cl.: G01K 13/02

(54) **FÜHLER**
PROBE
CAPTEUR

(30) Priorität: 15.02.2006 DE 102006007219; 09.05.2006 DE 102006021528
(43) Veröffentlichungstag der Anmeldung: 29.10.2008
(73) Patentinhaber: EPCOS AG, 81669 München (DE)
(72) Erfinder: BARD, Oliver, 14612 Falkensee (DE); OSTRICK, Bernhard, 14513 Teltow (DE)
(74) Vertreter: Epping - Hermann - Fischer
(86) Internationale Anmeldenummer: PCT/DE2007/000256
(87) Internationale Veröffentlichungsnummer: WO 2007/093156

(56) Entgegenhaltungen:
- WO-A1-03/076920
- GB-A- 734 702
- US-A- 2 496 806
- US-A- 4 265 115

## Beschreibung

Es wird ein Fühler beschreiben, der z. B. zur Temperaturmessung verwendet werden kann. Ein Temperaturfühler ist aus den Druckschriften EP 1435514 A2, JP 59171823 A, DE 10159869 A1, DE 2549619 A1, US 3623367, DE OS 21 57 029, GB 739694 und US 4265115 bekannt. Auch die US 2496806, GB 734702 und US 4265115 zeigen Temperaturfühler.

Ein Fühler nach dem Oberbegriff des Anspruchs 1 ist aus WO 03/076 920 bekannt.

Eine zu lösende Aufgabe besteht darin, einen Fühler anzugeben, der zum Vermessen von physikalischen Parametern eines Luftstroms geeignet ist.

Es wird ein Fühler mit einem Fühlelement und einem Träger für das Fühlelement angegeben, wie in Anspruch 1 beschrieben.

Obwohl nur Luft als strömendes Medium genannt wurde, kann der Fühler für ein beliebiges strömendes Medium, d. h. Gas oder Flüssigkeit, eingesetzt werden.

Das Fühlelement ist vorzugsweise zur Temperaturerfassung geeignet. Das Fühlelement kann z. B. ein unverkapseltes oder verkapseltes NTC-Element sein. NTC steht für Negative Temperature Coefficient. Weitere Temperaturfühler kommen auch in Betracht.

Da das Fühlelement vorzugsweise ein Punktfühler ist, ist eine durch die Vorrichtung zur Führung eines Luftstroms mögliche Temperaturintegration für die Anwendungen wie Klimaanlagen, die Luftstromkomponenten mit verschiedenen Temperaturen erzeugen, besonders vorteilhaft.

Das Fühlelement kann aber auch zur Messung des Feuchtigkeitsgehalts oder des Gehalts von einem zu überwachenden Luftstromanteils geeignet sein.

Der Fühler und insbesondere der Träger ist vorzugsweise bezogen auf eine Ebene, die senkrecht zur Stromrichtung angeordnet ist und in der die Längsachse des Trägers liegt, im Wesentlichen spiegelsymmetrisch ausgebildet. In diesem Fall weist der Fühler bei Umkehr der Stromrichtung die gleichen Eigenschaften bezüglich der Strömungsverhältnissen auf. Eine spiegelsymmetrische Ausführung des Fühlers hat insbesondere dann einen Vorteil, wenn zwei Fühler auf gegenüberliegenden Seiten eines externen Trägers angeordnet sein müssen, z. B. in einer Fahrzeugheizung beim Fahrersitz und Beifahrersitz.

Es wird als Vorteil betrachtet, wenn das Fühlelement nicht direkt angeströmt wird. Der Luftstrom kann daher am Lufteinlass durch mindestens eine Abschirmvorrichtung abgeschirmt sein. Die Abschirmvorrichtung trägt zur Umlenkung des Luftstroms bei.

Das Fühlelement kann durch eine Abschirmung, z. B. eine senkrecht zur Stromrichtung ausgerichtete Abschirmfläche, von einer direkten Anströmung des Luftstroms abgeschirmt sein. Die quer zur Stromrichtung des Eingangstroms gemessene lineare Querschnittsgröße bzw. Breite der jeweiligen Abschirmvorrichtung ist dabei vorzugsweise überall, d. h. für jeden Ort in vertikaler Richtung, größer als die in dieser Richtung gemessene lineare Querschnittsgröße bzw. Breite des Fühlelements.

Ferner werden bevorzugte Ausführungen des Fühlers beschrieben.

Die Temperatur wird innerhalb des Fühlers vorzugsweise über einen möglichst großen Bereich oder verschiedene, voneinander beabstandete oder miteinander verbundene, Bereiche des Luftstroms integriert. Vorzugsweise werden die Stromkomponenten über eine große Gesamtfläche gesammelt. Der im Fühler zur Leitung des Luftstroms ausgebildete Luftkanal kann einen Engpass im Bereich des Fühlelements aufweisen, so dass die über eine große Fläche gesammelten Komponenten des Luftstroms in einem so gebildeten Engpass vermischt und bezüglich deren durchschnittlichen Temperatur ausgewertet werden können. Somit erfolgt eine Mittelung der Temperatur bei einer nicht homogenen Temperaturverteilung im eintretenden Luftstrom.

Die Vorrichtung zur Führung des Luftstroms leitet den Luftstrom zum Fühlelement hin. Dabei wird die ursprüngliche Stromrichtung vorzugsweise durch Leitung oder Umlenkung geändert. Dafür ist insbesondere ein offener Kanal, ein geschlossener Kanal und/oder Umlenkflächen geeignet, durch die die Stromrichtung umgeleitet wird.

Unter einem geschlossenen Kanal wird ein Hohlraum verstanden, der für den Luftstrom zwar durch Ein- und Auslassöffnungen erreichbar ist, aber im Querschnitt allseitig durch Außenwände des Trägers umgeben ist. Ein offener Kanal stellt eine in einer Außenwand des Trägers ausgebildete, in einer Vorzugsrichtung gestreckte Vertiefung (Rille) dar.

Die Vorrichtung zur Führung des Luftstroms umfasst vorzugsweise ein Luftreservoir, das zur Vermischung von verschiedenen Komponenten des Luftstroms geeignet ist, die voneinander unterschiedliche physikalische Parameter wie z. B. Temperatur aufweisen. Die Vorrichtung zur Führung des Luftstroms ist vorzugsweise zur Temperaturintegration des Luftstroms geeignet.

Die Vorrichtung zur Führung des Luftstroms kann mindestens eine Verengung des Querschnitts aufweisen, was im Hinblick auf die Vermischung von Stromkomponenten vorteilhaft ist.

Die Vorrichtung zur Führung des Luftstroms kann mindestens eine Rille umfassen, die an einer Außenseite des Trägers verläuft. Die Vorrichtung zur Führung des Luftstroms kann auch einen Kanal mit einem offenen ersten Bereich und einem geschlossenen zweiten Bereich umfassen.

Die Vorrichtung zur Führung des Luftstroms weist vorzugsweise einen Lufteinlass und einen Luftauslass auf, die in einer Variante jeweils mindestens eine Öffnung oder Düse umfassen. Der Lufteinlass oder -auslass kann auch mehrere Öffnungen zum Durchlass des Luftstroms umfassen.

Am Luftauslass wird in einer Variante ein Unterdruck z. B. mittels Saugdruck oder Staudruck erzeugt.

Der Luftstrom wird vorzugsweise durch die Vorrichtung zur Führung des Luf-tstroms umgelenkt. Zur Umlenkung des Luftstroms ist beispielsweise eine Fläche geeignet, die - u. a. beispielsweise zur Bildung einer Verengung des Luftreservoirs - gegenüber einer Längsrichtung des Trägers geneigt ist. Diese Fläche fungiert als ein Luftstromreflektor und wird daher Reflektorfläche genannt.

Das Luftreservoir weist vorzugsweise einen Querschnitt auf, der sich in Stromrichtung, also zum Fühlelement hin, verjüngt. Der Mindestabstand zwischen dem Lufteinlass und dem Fühlelement ist vorzugsweise gleich groß gewählt wie derjenige zwischen dem Fühlelement und dem Luftauslass. Der Mindestabstand zwischen dem Lufteinlass und dem Fühlelement ist in einer weiteren Variante größer gewählt als derjenige zwischen dem Fühlelement und dem Luftauslass.

Die Reflektorfläche kann als ein Trichter ausgebildet sein, in dessen Bodenbereich vorzugsweise eine Öffnung angeordnet ist. Das Fühlelement ist in dieser Öffnung angeordnet. Der Luftauslass ist vorzugsweise in der Nähe dieser Öffnung angeordnet.

Die Längsachse des Trägers ist bezüglich der Stromrichtung des einfallenden Luftstroms vorzugsweise quer, d. h. senkrecht oder schräg, also nicht parallel, ausgerichtet. Der Träger umfasst vorzugsweise zwei Begrenzungsflächen, zwischen denen das Luftreservoir angeordnet ist, in dem der Luftstrom vom Lufteinlass zum Fühlelement und weiter zum Luftauslass geführt wird. Das Fühlelement, der Luftein- und auslass sowie die Vorrichtungen zur Führung des Luftstroms sind zwischen diesen Begrenzungsflächen angeordnet. Die Begrenzungsflächen sind vorzugsweise die Hauptflächen des Trägers.

Der Träger ist vorzugsweise als ein Gehäuse für das Fühlelement ausgebildet. Als Material für den Träger ist insbesondere ein elektrisch isolierender Kunststoff geeignet.

Der Träger ist auf einer Stirnseite vorzugsweise an einem Halter befestigt, in dem in einer Variante das Fühlelement gehalten wird. Das Fühlelement ist mittels Anschlussleitungen elektrisch kontaktierbar, die vorzugsweise durch den Halter durchgeführt und zur Stirnseite des Trägers herausgeführt sind. Der Halter kann eine elektrische Steckverbindung umfassen, in der die Anschlussleitungen des Fühlelements eingesteckt und durch Presspassung gehalten werden.

Die Ein- und Auslassöffnungen sind vorzugsweise in der Mantelfläche des Trägers ausgebildet. Sie können aber auch an einer Stirnseite des Trägers angeordnet sein. Die Einlassöffnungen sind vorzugsweise an einer ersten Stirnseite und das Fühlelement an einer zweiten Stirnseite des Trägers angeordnet. Das Fühlelement kann aber auch in einem Mittelbereich des Gehäuses angeordnet sein.

Die Anströmung des Fühlelements kann von zwei verschiedenen Seiten zur Erfassung von zwei Teilströmen des Luftstroms erfolgen. Dementsprechend können auf zwei (im Querschnitt) gegenüber liegenden Seiten des Trägers mindestens eine erste und mindestens eine zweite Einlassöffnung vorhanden sein. Der Luftauslass ist vorzugsweise für beide Luftströme gemeinsam vorgesehen.

In einer bevorzugten Variante ist der Querschnitt des Luftstroms am Einlass gleich groß wie am Auslass. In einer weiteren Variante ist die Vorrichtung zur Führung des Luftstroms so ausgebildet und der Lufteinlass und -auslass gegenüber dieser Vorrichtung derart positioniert, dass der Querschnitt des Luftstroms am Einlass größer ist als am Auslass.

Bei der spiegelsymmetrischen Ausführung des Fühlers sind vorzugsweise mindestens zwei Abschirmflächen vorgesehen. Dabei ist mindestens eine erste Abschirmfläche im Bereich der Einlassöffnung und mindestens eine zweite Abschirmfläche im Bereich der Auslassöffnung angeordnet. Die erste und zweite Abschirmfläche sind zueinander spiegelsymmetrisch ausgebildet. Die jeweilige Abschirmfläche kann insbesondere durch einen Teil, z. B. eine Seitenwand, des Trägers gebildet sein. Die Abschirmvorrichtung kann des Weiteren zwei gekrümmte Abschirmflächen aufweisen, zwischen denen das Fühlelement angeordnet ist. Eine zusätzliche Abschirmung kann durch die Verkapselung des Fühlelements gebildet sein.

In einer bevorzugten Variante werden alle Stromkomponenten, die das Fühlelement umströmen, mindestens einmal umgelenkt. Vorzugsweise gilt für jede Stromkomponente: der im Träger oder in der Vorrichtung zur Führung des Luftstroms verlaufende Weg der Stromkomponente von der Einlassöffnung bis zum Fühlelement ist größer als der Mindestabstand zwischen dem Fühlelement und der Oberfläche des Trägers. Dieser Abstand wird entlang der Richtung des Eingangsstroms gemessen.

Der Lufteinlass kann zur Verringerung des eintretenden Luftstroms u. U. mehrere Öffnungen aufweisen. Diese Öffnungen können voneinander isoliert oder durch mindestens einen engen Spalt miteinander verbunden sein. Die Abschirmung des Fühlelements durch ein am Lufteinlass ausgebildetes Gitter kommt auch in Betracht.

Der Träger umfasst vorzugsweise mindestens einen Körper, der sowohl auf der Seite des Lufteinlasses als auch auf der Seite des Luftauslasses jeweils eine Umlenkfläche aufweist. Der Körper weist also zwei aufeinander zulaufende, spiegelsymmetrische Umlenkflächen auf, die vorzugsweise gekrümmt sind.

Der Luftkanal ist im Bereich des Fühlelements durch den Körper des Trägers sowie durch einen Boden des Halters vorzugsweise relativ stark eingeschnürt. Die in Längsrichtung des Trägers und senkrecht zum Eingangsstrom gemessene Breite des

Luftkanals beträgt vorzugsweise maximal die doppelte Höhe des Luftkanals. Die Höhe des Luftkanals ist gleich dem Abstand zwischen den Hauptflächen des Trägers.

Die in Strömungsrichtung gemessene Länge des eingeschnürten Bereichs des Luftkanals wird durch den in dieser Richtung gemessenen Mindestabstand zwischen den Umlenkflächen bestimmt. Diese Länge beträgt vorzugsweise maximal eine doppelte lineare Querschnittsgröße des Fühlelements.

Eine geringe Länge des eingeschnürten Bereichs des Luftkanals hat den Vorteil, dass dabei die in Strömungsrichtung gemessene Breite des Trägers besonders klein gewählt werden kann.

Vorteilhafte Ausführungsformen werden anhand von schematischen und nicht maßstabsgetreuen Figuren erläutert. Es zeigen:
Figur 1 als Beispiel im Querschnitt einen Fühler mit einem Luftführungskanal;
Figur 2A als Beispiel im Querschnitt einen Fühler mit einer Vorrichtung zur Umlenkung des Luftstroms;
Figur 2B als Beispiel in einer perspektivischen Ansicht von unten den Fühler gemäß der Figur 2A;
Figur 3 als Beispiel im Querschnitt einen Fühler mit einem Fühlelement, das im Bodenbereich eines Trichters zur Umlenkung des Luftstroms angeordnet ist;
Figur 4A im Querschnitt einen Fühler mit vertauschbarem Lufteinlass und -auslass und einem eingeschnürten Luftkanal;
Figur 4B in einer perspektivischen Ansicht von unten den Fühler gemäß der Figur 4A;
Figur 4C im Querschnitt einen weiteren Fühler mit vertauschbarem Lufteinlass und -auslass;
Figur 5A im Querschnitt einen Fühler mit vertauschbarem Lufteinlass und -auslass und einem im Mittelbereich des Trägers platzierten Fühlelement;
Figur 5B in einer perspektivischen Ansicht von unten den Fühler gemäß der Figur 5A.

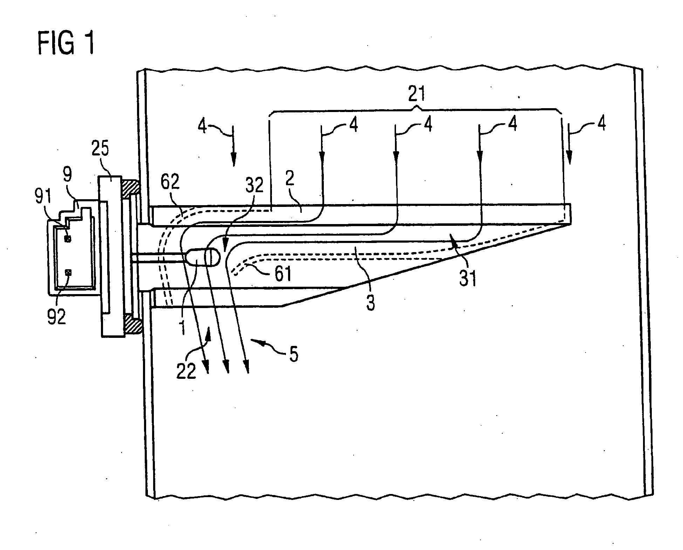

Figur 1 zeigt als Beispiel einen Fühler mit einem Fühlelement 1 und einem Gehäuse, das einen Träger 2 für das Fühlelement 1 umfasst. Der Träger 2 ist an einer Stirnseite am Halter 25 befestigt. Der Halter 25 umfasst vorzugsweise eine Steckverbindung. Möglich ist aber auch, dass in der Figur nicht gezeigte Kabel oder Anschlussleitungen zur Kontaktierung des Fühlelements 1 durch den Halter 25 hindurch geführt sind.

Der Fühler ist mittels eines Steckers 9 elektrisch kontaktierbar. Der Stecker 9 dient zur elektrischen Verbindung zwischen dem Fühler und einer externen Messschaltung, mit der der vom Fühler erzeugte Strom erfasst und weiter verarbeitet wird. Der Stecker 9 umfasst Kontaktelemente 91, 92 zur elektrischen Kontaktierung von Anschlussleitungen des Fühlelements 1. Das Grundmaterial dieser Kontaktelemente weist vorzugsweise eine geringere Wärmeleitzahl als die Anschlussleitungen auf.

Das Gehäuse umfasst ein Luftreservoir 3, das zwischen der Innenfläche des Trägers 2 und zwei Umlenkflächen 61, 62 angeordnet ist. Die Umlenkflächen 61, 62 sind gebogen.

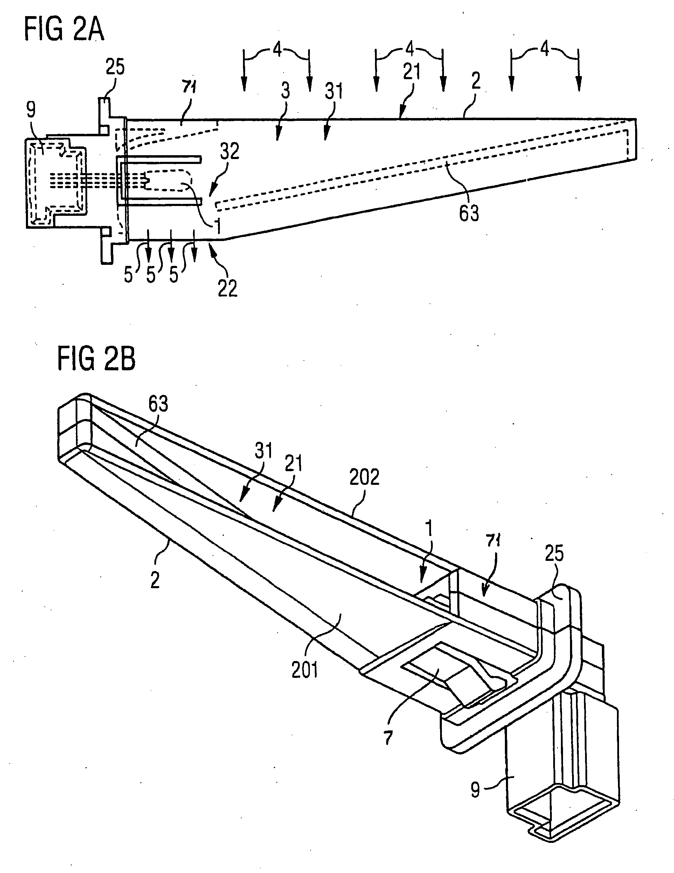

Der einfallende Luftstrom 4 dringt in das Luftreservoir 3 durch eine Eintrittsöffnung 21 ein und verlässt es durch die Austrittsöffnung 22. Eine weitere Ansicht des Fühlers gemäß der Figur 2A ist in Figur 2B darstellt. Das Luftreservoir 31 ist hier als ein offener Kanal ausgebildet. Der Kanal ist durch zwei Leitflächen 201, 202 des Trägers 2 und durch die Umlenkfläche 63 gebildet. Die offene Seite dieses Kanals bildet die Eintrittsöffnung 21.

Die Richtung des einfallendes Luftstroms 4 und des heraustretenden Luftstroms 5 ist jeweils mit Pfeilen angedeutet. Das Luftreservoir 3 ist zur Vermischung von verschiedenen Komponenten des Luftstroms geeignet, die am Lufteinlass voneinander verschiedene Temperaturen aufweisen.

Das Luftreservoir 3 umfasst einen in Längsrichtung des Gehäuses gestreckten Luftführungskanal. Das Luftreservoir 3 weist einen zum Einlass gewandten Sammelbereich 31 auf, in dem der Querschnitt des Luftstroms relativ groß ist. Verschiedene Stromkomponenten vermischen sich im Sammelbereich 31 und passieren weiter zu einem Engpassbereich 32, der eine Verengung des Querschnitts des Luftstroms bewirkt. Das Fühlelement 1 ist im Engpassbereich 32 in der Nähe der Austrittsöffnung 22 angeordnet.

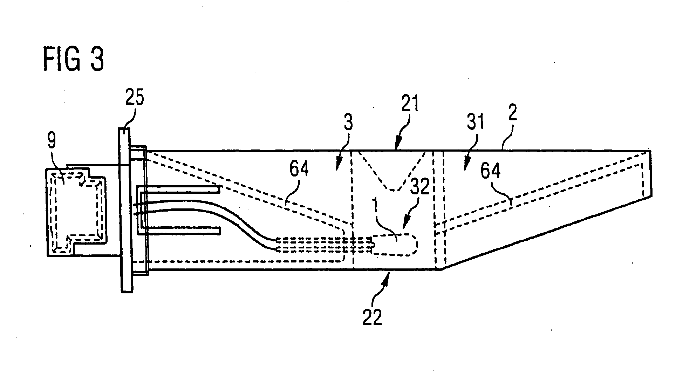

In den Varianten gemäß den Figuren 1 und 2A, 2B ist als Beispiel das Fühlelement 1 in einem Randbereich des Gehäuses angeordnet. Dagegen ist in der Variante gemäß Figur 3 als Beispiel das Fühlelement 1 in einem Mittelbereich des Gehäuses angeordnet, d. h. es ist - bezogen auf die Längsrichtung - von den Stirnseiten des Trägers 2 abgewandt.

In der Variante gemäß den Figuren 2A, 2B ist als Beispiel eine Umlenkfläche 63 vorgesehen, die gegenüber der Längsachse des Trägers 2 geneigt ist. Der Neigungswinkel ist vorzugsweise kleiner als 45°.

Die Seitenfläche des Fühlelements 1 ist durch eine Abschirmung 71 vor einer direkten Luftanströmung geschützt.

Der Rasthaken 7 dient zum Einrasten des Trägers 2 beispielsweise in ein Gehäuseteil der Anwendung.

In den Fig. 2A und 2B ist als Beispiel der Engpass des Luftreservoirs 3 zwischen einer Kante der Umlenkfläche 63 und der Abschirmung 71 gebildet.

In der Variante gemäß der Figur 3 ist als Beispiel eine Reflektorfläche in Form eines Trichters 64 mit einer Öffnung in seinem Bodenbereich vorgesehen, in der das Fühlelement 1 angeordnet ist. Wie in Fig. 1 wird auch hier das Luftreservoir 3 zum Fühlelement 1 hin verengt.

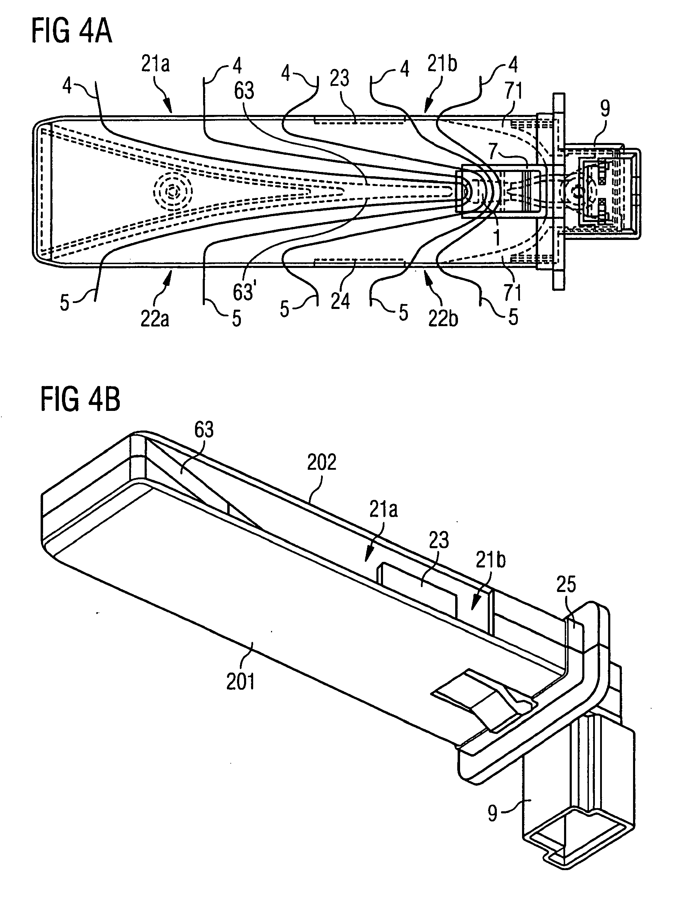

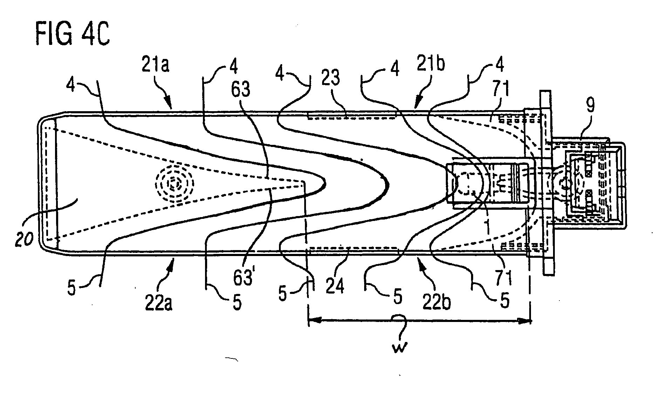

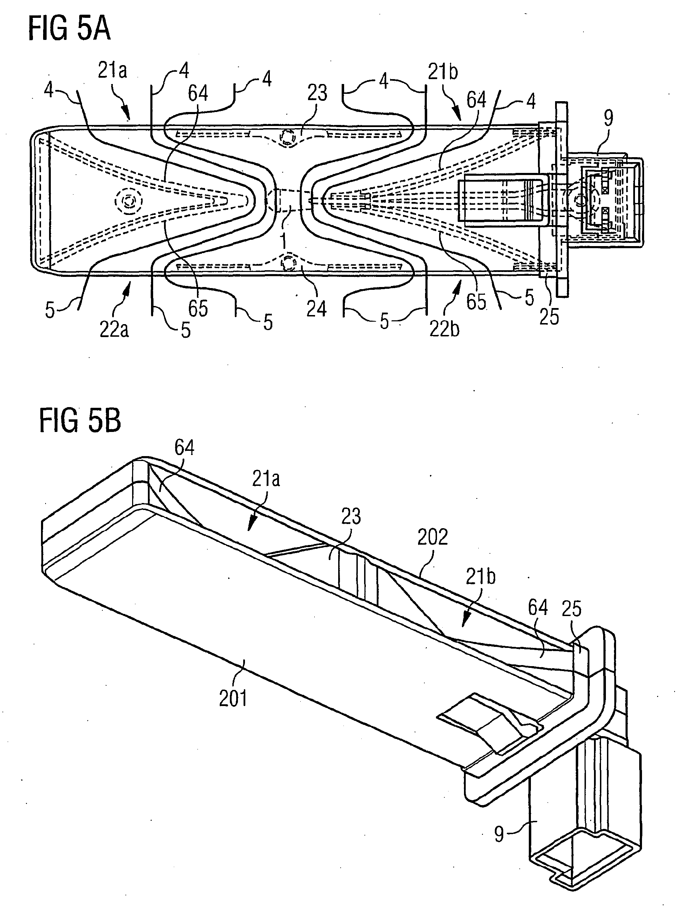

In den Figuren 4A, 4B, 4C und 5A, 5B ist jeweils ein Fühler gezeigt, der für eine beidseitige Anströmung des Fühlelements 1 z. B. für einen Luftstrom, der parallel zu den Begrenzungsflächen 201, 202 verläuft, ausgelegt ist. Dabei kann ein Lufteinlass 21a, 21b gegen einen Luftauslass 22a, 22b ausgetauscht werden, und umgekehrt. In diesem Sinne ist es besonders vorteilhaft, wenn der Fühler bezogen auf eine Ebene spiegelsymmetrisch ausgebildet ist, die senkrecht zur Stromrichtung angeordnet ist und in der die Längsachse des Fühlers liegt.

Die Anordnung des Fühlelements 1 in Fig. 4A entspricht derjenigen in Fig. 2A. Die Anordnung des Fühlelements 1 in Fig. 5A entspricht im Wesentlichen derjenigen in Fig. 3. Die in den Figuren 4A und 5A zu sehenden Umlenkflächen 63, 63', 64, 65 sind im Gegensatz zu den in Figuren 2A und 3 gezeigten Umlenkflächen nicht eben, sondern z. B. parabolisch oder hyperbolisch gekrümmt. Weitere, für Reflektorflächen üblicherweise verwendete, Flächenausgestaltungen kommen auch in Betracht.

Die je nach Stromrichtung als Lufteintritt vorgesehenen Durchlassöffnungen 21a, 21b oder 22a, 22b sind so angeordnet, dass möglichst viele Komponenten des auszuwertenden Luftstroms, d. h. ein Teil des Luftstroms mit einem relativ großen Gesamtquerschnitt, in das Luftreservoir des Fühlers gelangen und in Richtung des Fühlelements 1 umgelenkt werden kann.

Zur Modifizierung, insbesondere Reduktion, des zum Fühlelement 1 umzuleitenden Luftstroms sind in den Varianten gemäß den Figuren 4A, 4B und 5A, 5B Abschirmflächen 23, 24 vorgesehen. Mit den Abschirmflächen 23, 24 gelingt es, den Durchlassquerschnitt des eintretenden Luftstroms 4 zu verringern. Die Abschirmflächen 23, 24 stellen einen Widerstand für den Luftstrom dar und bewirken unter anderem die Umlenkung von einigen anfangs parallel zueinander verlaufenden Komponenten des Luftstroms, wodurch das Vermischen von verschiedenen Stromkomponenten zustande kommt.

Der eintretende Luftstrom 4 wird durch eine Abschirmvorrichtung wie z. B. die Abschirmfläche 23, 24 in einem Bereich unterbrochen und dadurch abgeschwächt.

Der größere Teil des Luftstroms wird beim Fühler gemäß Fig. 4A je nach Stromrichtung durch die Durchlassöffnung 21a oder 22a aufgenommen. Um den Luftstau im Bereich des Fühlelements 1 zu vermeiden, wird zumindest ein kleiner Teil des Luftstroms 4, 5 nahe an diesem Bereich durchgelassen. Dafür ist beiderseits je eine zum Fühlelement 1 am nächsten liegende Öffnung 21b, 22b vorgesehen, die kleiner ist als die Öffnung 21a, 22a.

Alle Komponenten des Luftstroms, die durch den Lufteinlass in das Luftreservoir eintreten, fließen durch den Engpassbereich hindurch, in dem das Fühlelement 1 angeordnet ist. Der Engpassbereich ist vorzugsweise in einer Projektionsebene, die quer zur Stromrichtung verläuft, gegenüber den Durchlassöffnungen 21b, 22b versetzt.

Beim Fühler gemäß der Fig. 4A ist die Abschirmvorrichtung 71 mit zwei Reflektorflächen ausgebildet. Die Reflektorflächen beugen einem Luftstau im Bereich des Fühlelements 1 vor. Die Abschirmvorrichtung 71 ist derart dimensioniert, dass sie eine direkte Anströmung des Fühlelements verhindert. Dadurch verlängert sich der Stromweg zwischen der zum Fühlelement am nächsten liegenden Öffnung 21b, 22b und dem Fühlelement 1.

Die Öffnungen 21a und 21b (sowie 22a und 22b) sind in Fig. 4A, 4B im Gegensatz zu Fig. 5A, 5B miteinander verbunden, da die Abschirmfläche 23, 24 nur an die untere Begrenzungsfläche 201 angrenzt. In Fig. 5A, 5B ist die Abschirmfläche 23, 24 als Trapez ausgebildet und verbindet die beiden Begrenzungsflächen 201, 202. Die Trapezform ist dabei optional. Die Abschirmflächen 23, 24 können im Prinzip beliebig, u. U. in Form eines Gitters, ausgestaltet sein.

Bei zumindest zwei auf gegenüber liegenden Seiten des Trägers angeordneten Durchlassöffnungen, z. B. den Öffnungen 21a und 22a in Fig. 4A, kann für jede Öffnung eine eigene Umlenkfläche 63 und 63' vorgesehen sein.

Der Luftkanal ist im Bereich des Fühlelements 1 durch einen Körper 20 des Trägers, der die gekrümmten, aufeinander zulaufenden Umlenkflächen 63, 63' aufweist, sowie durch einen Boden des Abschirmelements 71 vorzugsweise relativ stark eingeschnürt. Die in Längsrichtung gemessene Breite w des Luftkanals beträgt vorzugsweise maximal die doppelte Höhe h des Luftkanals, siehe Fig. 4A und 4B. Die Höhe des Luftkanals ist gleich dem Abstand zwischen den Hauptflächen 201, 202 des Trägers 2.

Die Breite w des Luftkanals kann im Prinzip, wie in der in Fig. 4C vorgestellten Variante, auch größer gewählt werden, sofern das Fühlelement 1 durch die Abschirmvorrichtungen 23, 24 und 71 vor einem zu starken Luftstrom und insbesondere vor einer direkten Anströmung ausreichend geschützt ist.

Die Umlenkflächen 63, 63' laufen zum Fühlelement 1 hin aufeinander vorzugsweise unter einem spitzen Winkel zu.

Die in Strömungsrichtung gemessene Länge des eingeschnürten Bereichs des Luftkanals wird durch die in dieser Richtung gemessene Mindestbreite des Körpers 20, d. h. durch den Mindestabstand zwischen den Umlenkflächen 63, 63', bestimmt. Diese Länge beträgt vorzugsweise maximal eine doppelte lineare Querschnittsgröße des Fühlelements 1.

Falls das Fühlelement 1 wie in Fig. 5A im Mittelbereich des Trägers 2 platziert ist, kann für jede als Lufteinlass geeignete Durchlassöffnung 21a, 21b, 22a, 22b eine eigene Umlenkfläche 64, 65 vorgesehen sein. In diesem Fall sind zwei Körper 20 mit Umlenkflächen 64, 65 vorgesehen. Die Breite w des im Bereich des Fühlelements 1 eingeschnürten Luftkanals ist in diesem Fall durch die zueinander gewandten Enden der beiden Körper 20 bestimmt. Drei verschiedene Möglichkeiten zur Ausbildung der Umlenkflächen 64, 65 bzw. zur Einstellung der Breite w des Luftkanals im Bereich des Fühlelements 1 sind mit gestrichelten Linien angedeutet.

Die in Zusammenhang mit einer der Varianten beschriebenen Merkmale sind jeweils in den übrigen Varianten ohne Einschränkung einsetzbar. Ausführungsmöglichkeiten bezüglich der Form der gezeigten Elemente des Fühlers sind nicht auf die gezeigten Beispiele beschränkt.

### Bezugszeichenliste

- 1: Fühlelement
- 2: Träger
- 20: Körper mit Umlenkflächen
- 21, 21a, 21b: Einlassöffnungen
- 22, 22a, 22b: Auslassöffnungen
- 23, 24: Abschirmfläche
- 25: Steckerbereich, Halter
- 3: Luftreservoir
- 31: Sammelbereich des Luftreservoirs
- 32: Engpassbereich des Luftreservoirs
- 4: einfallender Luftstrom
- 5: heraustretender Luftstrom
- 61, 62, 63, 64, 65: Umlenkflächen
- 7: Rasterhaken
- 71: Abschirmung vor einer direkten Anströmung
- 9: Stecker zum Anschließen des Fühlers
- w: Breite des Luftkanals

## Patentansprüche

1. Fühler
- mit einem Fühlelement (1),
- mit einem Träger (2) für das Fühlelement (1),
- wobei der Träger (2) eine integrierte Vorrichtung zur Führung eines Luftstroms zum Fühlelement (1) mit mindestens einer ersten Durchlassöffnung (21a, 21b) und mindestens einer zweiten Durchlassöffnung (22a, 22b), die auf gegenüberliegenden Seiten des Trägers (2) angeordnet sind, aufweist,
- wobei der Fühler und insbesondere der Träger bezogen auf eine Ebene, in der die Längsachse des Trägers liegt, im Wesentlichen spiegelsymmetrisch ausgebildet ist, und
wobei die erste Durchlassöffnung (21a, 21b) und die zweite Durchlassöffnung (22a, 22b ) jeweils als Lufteinlass geeignet sind, und auf gegenüberliegenden Seiten des Trägers spiegelsymmetrisch zur besagten Ebene angeordnet, sind,
**dadurch gekennzeichnet, dass** die Vorrichtung zur Führung des Luftstroms eine Verengung des Querschnitts aufweist.

2. Fühler nach Anspruch 1,
wobei das Fühlelement (1) zur Temperaturmessung geeignet ist.

3. Fühler nach Anspruch 1 oder 2,
- wobei die Vorrichtung zur Führung des Luftstroms ein Luftreservoir (3) umfasst.

4. Fühler nach Anspruch 3,
- wobei das Luftreservoir (3) einen Kanal umfasst.

5. Fühler nach Anspruch 3,
- wobei die Vorrichtung zur Führung des Luftstroms eine Rille umfasst, die an einer Außenseite des Trägers (2) verläuft.

6. Fühler nach einem der Ansprüche 1 bis 5,
- wobei die Vorrichtung zur Führung des Luftstroms mindestens einen Lufteinlass und mindestens einen Luftauslass aufweist.

7. Fühler nach einem der Ansprüche 1 bis 6,
- wobei die Vorrichtung zur Führung des Luftstroms zur Vermischung von verschiedenen Komponenten des Luftstroms geeignet ist, die am Lufteinlass voneinander verschiedene Temperaturen aufweisen.

8. Fühler nach einem der Ansprüche 1 bis 7,
- wobei der Luftstrom durch die Vorrichtung zur Führung des Luftstroms in Richtung des Fühlelements (1) umgelenkt wird.

9. Fühler nach Anspruch 8,
- wobei die Umlenkung des Luftstroms (4) durch Umlenkflächen (61, 62, 63, 64, 65) erfolgt, die gegenüber einer Längsrichtung des Trägers (2) geneigt sind.

10. Fühler nach einem der Ansprüche 1 bis 9,
- wobei der Querschnitt des Luftreservoirs (3) sich zum Fühlelement (1) hin verjüngt.

11. Fühler nach einem der Ansprüche 1 bis 10,
- wobei das Fühlelement (1) durch eine Abschirmung von einer direkten Anströmung des Luftstroms abgeschirmt ist.

12. Fühler nach einem der Ansprüche 1 bis 11,
- wobei mindestens zwei Abschirmelemente (71) zur Abschirmung des Fühlelements (1) von direkter Anströmung vorgesehen sind.

13. Fühler nach Anspruch 12,
wobei die Abschirmelemente (71) spiegelsymmetrisch angeordnet sind.

14. Fühler nach Anspruch 8,
- wobei der einfallende Luftstrom im Luftreservoir (3) mehrfach umgelenkt wird.

15. Fühler nach einem der Ansprüche 6 bis 9,
- wobei am Lufteinlass (21) mindestens eine erste Abschirmvorrichtung (23) zur Einschnürung des eintretenden Luftstroms (4) vorgesehen ist, die quer zur Stromrichtung angeordnet ist,
- wobei am Lufteinlass (22) mindestens eine zweite Abschirmvorrichtung (24) zur Einschnürung des austretenden Luftstroms (5) vorgesehen ist, die quer zur Stromrichtung angeordnet ist,
- wobei die erste und zweite Abschirmvorrichtungen (23, 24) spiegelsymmetrisch zueinander ausgebildet sind.

16. Fühler nach einem der Ansprüche 1 bis 14,
- wobei im Träger (2) für jede Durchlassöffnung (21a, 21b, 22a, 22b) eine Vorrichtung zur Führung des Luftstroms vorgesehen ist, durch die der eintretende Luftstrom (4) in Richtung des Fühlelements (1) umgelenkt wird.

17. Fühler nach einem der Ansprüche 1 bis 16,
- wobei der Träger (2) mindestens einen Körper aufweist, der zwei zueinander spiegelsymmetrische, im Querschnitt zum Fühlelement (1) hin aufeinander zulaufende Umlenkflächen (63, 63', 64, 65) aufweist.

## Claims

1. A sensor
- having a sensing element (1),
- having a carrier (2) for the sensing element (1),
- the carrier (2) comprising an integrated device for guiding an air flow to the sensing element (1), having at least one first pass-through opening (21a, 21b) and at least one second pass-through opening (22a, 22b) disposed on opposite sides of the carrier,
- wherein the sensor, and particularly the carrier, being designed substantially mirror-symmetrical relative to a plane in which the longitudinal axis of the carrier lies, and
- wherein the first pass-through opening (21a, 21b) and the second pass-through opening (22a, 22b) each being suitable as an air inlet, and disposed mirror-symmetrically relative to said plane on opposite sides of the carrier,
**characterized in that** the device for guiding the air flow comprises a narrowing of the cross section thereof.

2. The sensor according to Claim 1,
wherein the sensing element (1) is suitable for measuring temperature.

3. The sensor according to Claim 1 or 2,
- wherein the device for guiding the air flow comprises an air reservoir (3)

4. The sensor according to Claim 3,
- wherein the air reservoir (3) comprises a channel.

5. The sensor according to Claim 3,
- wherein the device for guiding the air flow comprises a groove running on an exterior side of the carrier (2).

6. The sensor according to any of the Claims 1 to 5,
- wherein the device for guiding the air flow comprises at least one air inlet and at least one air outlet.

7. The sensor according to any of the Claims 1 to 6,
- wherein the device for guiding the air flow is suitable for mixing different components of the air flow having temperatures different from each other at the air inlet.

8. The sensor according to any of the Claims 1 to 7,
- wherein the air flow is diverted in the direction of the sensing element (1) by the device for guiding the air flow.

9. The sensor according to Claim 8,
- wherein the diversion of the air flow (4) is performed by diverting surfaces (61, 62, 63, 64, 65) inclined relative to the longitudinal axis of the carrier (2).

10. The sensor according to any of the Claims 1 to 9,
- wherein the cross section of the air reservoir (3) narrows in the direction toward the sensing element (1).

11. The sensor according to any of the Claims 1 through 10,
- wherein the sensing element (1) is shielded from direct inflow of the air flow by a shield.

12. The sensor according to any of the Claims 1 through 11,
- wherein at least two shielding elements (71) are provided for shielding the sensing element (1) from direct inflow.

13. The sensor according to Claim 12,
wherein the shielding elements (71) are disposed mirror-symmetrically.

14. The sensor according to Claim 8,
- wherein the incident air flow in the air reservoir (3) is diverted multiple times.

15. The sensor according to any of the Claims 6 to 9,
- wherein at least one first shielding device (23) is disposed transverse to the flow direction for constricting the entering air flow at the air inlet (21),
- wherein at least one second shielding device (24) is disposed transverse to the flow direction for constricting the exiting air flow at the air inlet (22),
- wherein the first and second shielding devices (23, 24) are designed mirror-symmetrical to each other.

16. The sensor according to any of the Claims 1 to 14,
- wherein a device for guiding the air flow is provided in the carrier (2) for each pass-through opening (21a, 21b, 22a, 22b), by which the entering air flow (4) is diverted in the direction of the sensing element (1).

17. The sensor according to any of the Claims 1 through 16,
- wherein the carrier (2) comprises at least one body comprising two mirror-symmetrical diverting surfaces (63, 63', 64, 65) tapering in the cross section toward the sensing element (1).

## Revendications

1. Palpeur
- avec un élément palpeur (1),
- avec un support (2) pour l'élément palpeur (1),
- sachant que le support (2) comporte un dispositif intégré pour conduire un courant d'air à l'élément palpeur (1) avec au moins une première ouverture de passage (21a, 21b) et au moins une seconde ouverture de passage (22a, 22b), qui sont disposées sur des côtés opposés du support (2),
- sachant que le palpeur, et particulièrement le support, se présentent sous une forme essentiellement en symétrie de miroir par rapport à un plan dans lequel est situé l'axe longitudinal du support, et
- sachant que la première ouverture de passage (21a, 21b) et la seconde ouverture de passage (22a, 22b) sont respectivement appropriées comme prise d'air et sont disposées sur des côtés opposés du support en symétrie de miroir par rapport audit plan,
- **caractérisé en ce que** le dispositif pour la conduite du courant d'air présente un rétrécissement de sa section.

2. Palpeur selon la revendication 1,
sachant que l'élément palpeur(1) est approprié pour la mesure de la température.

3. Palpeur selon l'une quelconque des revendications 1 ou 2,
- sachant que le dispositif pour la conduite du courant d'air comprend un réservoir à air (3).

4. Palpeur selon la revendication 3,
- sachant que le réservoir à air (3) comprend un canal.

5. Palpeur selon la revendication 3,
- sachant que le dispositif pour la conduite du courant d'air comprend une rainure, qui parcourt un côté extérieur du support (2).

6. Palpeur selon l'une quelconque des revendications 1 à 5,
- sachant que le dispositif pour la conduite du courant d'air comprend au moins une prise d'air et au moins une sortie d'air.

7. Palpeur selon l'une quelconque des revendications 1 à 6,
- sachant que le dispositif pour la conduite du courant d'air est approprié pour mélanger différentes composantes du courant d'air, qui présentent des températures différentes l'une de l'autre à la prise d'air.

8. Palpeur selon l'une quelconque des revendications 1 à 7,
- sachant que le courant d'air est dévié dans la direction de l'élément palpeur (1) par le dispositif pour la conduite du courant d'air.

9. Palpeur selon la revendication 8,
- sachant que la déviation du courant d'air (4) est effectuée par des surfaces de déviation (61, 62, 63, 64, 65), qui sont inclinées par rapport à un sens longitudinal du support (2).

10. Palpeur selon l'une quelconque des revendications 1 à 9,
- sachant que la section du réservoir à air (3) se rétrécit vers l'élément palpeur (1).

11. Palpeur selon l'une quelconque des revendications 1 à 10,
- sachant que l'élément palpeur (1) est protégé par un écran contre un soufflage direct du courant d'air.

12. Palpeur selon l'une quelconque des revendications 1 à 11,
- sachant que deux éléments d'écrannage (71) au moins sont prévus pour l'écrannage de l'élément palpeur contre un soufflage direct.

13. Palpeur selon la revendication 12,
sachant que les éléments d'écrannage (71) sont disposés en symétrie de miroir.

14. Palpeur selon la revendication 8,
- sachant que le courant d'air entrant dans le réservoir à air (3) est dévié à plusieurs reprises.

15. Palpeur selon l'une quelconque des revendications 6 à 9,
- sachant qu'à la prise d'air (21) il est prévu au moins un premier dispositif d'écrannage (23) pour l'étranglement du courant d'air entrant, qui est disposé perpendiculairement au sens du courant d'air.
- sachant qu'à la prise d'air (22) il est prévu au moins un second dispositif d'écrannage (24) pour l'étranglement du courant d'air sortant, qui est disposé perpendiculairement au sens du courant d'air,
- sachant que le premier et le second dispositif d'écrannage (23, 24) se présentent sous une forme en symétrie de miroir l'un par rapport à l'autre.

16. Palpeur selon l'une quelconque des revendications 1 à 14,
- sachant qu'il est prévu dans le support (2), pour chaque ouverture de passage (21a, 21b, 22a, 22b), un dispositif pour la conduite du courant d'air, par lequel le courant d'air entrant (4) est dévié dans la direction de l'élément palpeur (1).

17. Palpeur selon l'une quelconque des revendications 1 à 16,
- sachant que le support (2) comporte au moins un corps, qui comprend deux surfaces de déviation (63, 63', 64, 65) en symétrie de miroir l'une par rapport à l'autre et à sections concourantes vers l'élément palpeur (1).
